Europäisches Patentamt

European Patent Office

Office européen des brevets

(11) Publication number: **0 281 700**
**A1**

## (12) EUROPEAN PATENT APPLICATION

(21) Application number: 87302201.6

(22) Date of filing: 13.03.87

(51) Int. Cl.⁴: **F01N 1/14**

(43) Date of publication of application:
**14.09.88 Bulletin 88/37**

(84) Designated Contracting States:
**AT BE CH DE ES FR GB GR IT LI LU NL SE**

(71) Applicant: **Ou, A-Lin**
**NO. 21 Ren-He Street Cheng-Gung Li**
**Jung-Li City(TW)**

(72) Inventor: **Ou, A-Lin**
**NO. 21 Ren-He Street Cheng-Gung Li**
**Jung-Li City(TW)**

(74) Representative: **Arthur, Bryan Edward et al**
**Withers & Rogers 4 Dyer's Buildings Holborn**
**London EC1N 2JT(GB)**

(54) **Exhaust control devices.**

(57) An exhaust gas-receiving chamber (2) connected through an inlet-pipe (3) to the vehicle exhaust system is provided with a gas-mixing head (1) which receives air through an air-intake pipe (10) and exhaust gases through a plurality of inlets (12). The mixture of air and exhaust gases are discharged into the atmosphere through an outlet pipe (11). This device is designed to increase the driving power of the vehicle, to reduce the exhausting noise and to dilute carbon monoxide.

F I G. 2

EP 0 281 700 A1

## EXHAUST CONTROL DEVICES

" Transportation " has long been parallel with human being's evolutional history since the era of using round wheel vehicle up to the modern automobile; the modern vehicle not only has made the world a smaller one, but also has caused the friendship among people closer, and caused economic activities boomed. The automobile has become an indispensable transportation means in our modern life; however, the current conventional automobiles have a lower efficiency in terms of power output, a high noise level, and a high level of dark exhausted gas. All the aforesaid drawbacks thereof have become serious problems in wasting the natural energy, and jeopardizing our health. In view of the aforesaid urgent problems, the inventor has developed a new " Exhausting Pipe Device for Vehicles ", of which the structure is described as follows:

This invention provides an exhausting pipe device for vehicles. The features of this device are that it can exhaust the waste gas being not burned completely so as to increase the driving power of the vehicle, and can reduce the exhausting noise, and dilute the carbon monoxide (CO).

Fig. 1 is a perspective and fragmental sectional view of the present invention.

Fig. 2 is a perspective and fragmental sectional of the present invention after being assembled.

Fig. 3 is a disassembled and perspective view of the present invention, being viewed from the end of the mixed gas exhausting pipe.

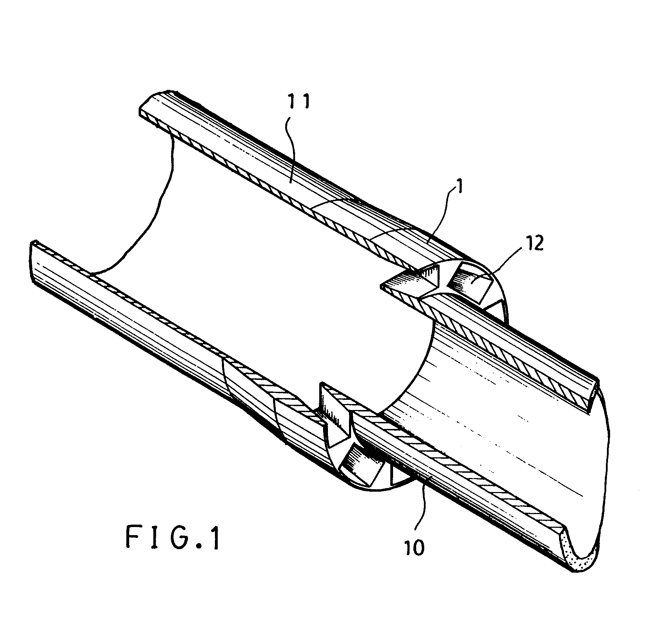

Fig. 1 illustrates a perspective and fragmental sectional view of the present invention, in which the gas-mixing head 1 looks like a cylinder; one end of the head 1 is connected with an air-intake pipe 10, while the other end of the head 1 is connected with an exhausting pipe 11 of the mixed gas. One end of the gas-mixing head 1 is furnished with several waste gas inlets 12, each of which is in a rectangular shape, and in parallel with the air-intake pipe 10; each of the waste gas inlet 12 forms into a reducing sectional size toward the exhausting pipe 11 side.

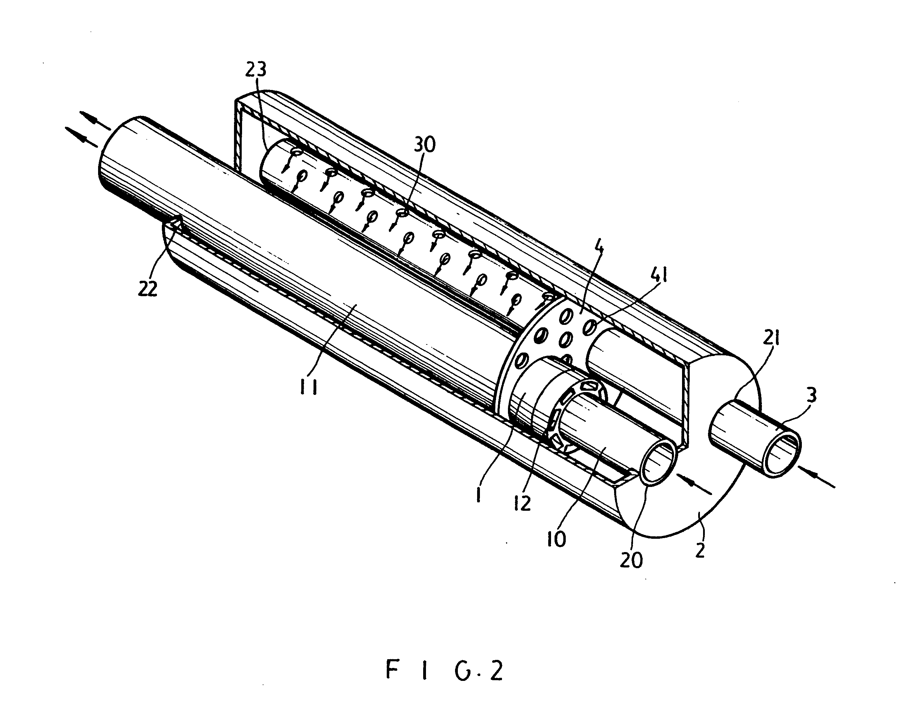

Fig. 2 illustrates the perspective and fragmental sectional view of the present invention after being assembled, in which the gas-storage chamber 2 looks like a short cylinder, ·of which one end is furnished with an intake-pipe hole 20 and an exhausting pipe hole 21, while the other end thereof is also furnished with an exhausting pipe hole 22 and a hole 23 for mounting one end of the waste gas exhausting pipe.

The waste-gas exhausting pipe 3 is a round pipe, of which the front end is to be connected with the exhaust valve of an engine, while the rear portion thereof inside the gas-storage chamber 2 and behind the partition board 4 is furnished with a plurality of small exhausting holes 30.

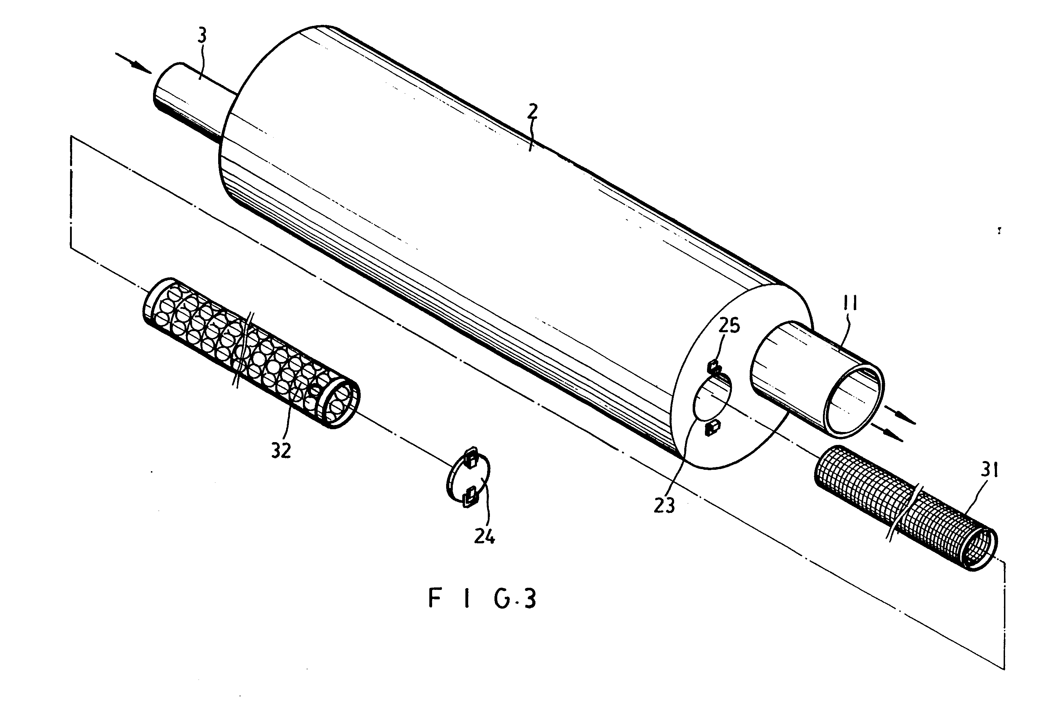

Fig.3 is a disassembled and perspective view of the present invention viewed from the exhausting pipe of the mixed gas. In assembling, the air-intake pipe 10 and the exhausting pipe 11 of mixed gas being connected to the both ends of the gas-mixing head 1 are mounted in the intake-pipe hole 20 and the exhausting pipe hole 22 on the gas-storage chamber 2 respectively. One end of the waste-gas exhausting pipe 3 is mounted in the exhausting pipe hole 21, while the other end thereof is mounted in hole 23. In order to facilitate the cleaning and replacement of the filtering net 31 and the muffler 32 in the waste-gas exhausting pipe 3 , the tail end of the waste gas exhausting pipe 3 is furnished with a seal cap 24 to be fastened in place with a fastener 25.

In using the present invention, the waste gas is exhausted into the waste-gas exhausting pipe 3 as shown in Fig. 2 ; the waste gas will pass through the filtering net 31 and the muffler 32 to reduce its speed and to increase its pressure; then, the waste gas passes through the exhausting holes 30, and is compressed in the rear part of the gas-storage chamber 2 , passing through the holes 41 of the partition board 4 for gaining more pressure. Upon the vehicle moving forwards, a relative velocity is generated to cause the air to enter into the air-intake pipe 10 and into the mixed gas exhausting pipe 11 .

According to Bernoulli's Equation,
$$\frac{V^2}{2g} \text{ (Velocity Energy)} + \frac{P}{P} \text{ (Pressure Energy)} + GZ\text{(Potential Energy)} = E\text{(Total Energy)} = \text{Constant}$$

Upon air entering into the mixed gas exhausting pipe 11 , its pressure will be reduced because of its velocity being increased; the waste gas in the gas-storage chamber 2 enters into the waste gas inlet 12 as a result of the waste gas being reduced in·velocity and increased in pressure by the waste-gas exhausting pipe 3 . Before the waste gas entering into the gas-storage chamber 2, its jet velocity has been increased upon passing through the size-reducing waste gas inlet 12 ; therefore, the waste gas after passing through the aforesaid pressure-increasing steps enters into the mixed gas exhausting pipe 11 to mix with the air at a high speed.

The incomplete combustion gas, i.e., carbon monoxide (CO), exhausted out of the engine will, after being increased in pressure and velocity, be mixed up with the air, and then exhausted out of the mixed gas exhausting pipe 11. According to the third law of Newton, if two particles interact, the force exerted by the first particle on the second particle ( called the action force ) is equal in magnitude and opposite in direction to the force exerted by the second particle on the first particle ( called the reaction force ); therefore, the gas exhausted out of an engine will generate a driving force to drive an automobile forwards after being increased in velocity and pressure, i.e., the present invention can let an automobile save fuel; further, the incomplete combustion gas (CO) exhausted out of the engine will mix up with the oxygen ($O_2$) in the air to convert into $CO_2$, i.e., $CO + \frac{1}{2}O_2 \rightarrow CO_2$, which is harmful to human body. By means of the present invention, the carbon monoxide (CO) in per unit space can be diluted by the air to prevent a person from inhaling more carbon monoxide that is harmful to our body.

Since the present invention can have the gas exhausted out of the engine compressed and inflated repeatedly, the explosive noise usually generated by the exhausting pipe will be reduced considerably.

In view of the aforesaid features, the present invention can let the vehicle generate more driving power, minimize noise, and dilute the carbon monoxide, and therefore it is a patentable invention.

## Claims

1. An exhaust control device for location in a vehicle exhaust system, the device having a gas-receiving chamber (2) comprising a gas-mixing head (1) which is connected with an air-intake pipe (10) at one end and which has a plurality of exhaust gas inlets (12) and a region for mixing of the intaken air and waste gas;

a gas exhaust outlet pipe (11) connected with the outlet of the gas mixing head;

a gas exhaust inlet pipe (3) having means for connection with vehicle exhaust system;

means (4) for reducing the flow speed of intaken waste gas and increasing the gas pressure; and

the gas exhaust inlet pipe (3) further has a plurality of outlets (30) spaced from the gas inlets (12) of the gas mixing head.

2. An exhaust control device according to Claim 1, wherein the inlets (12) of the gas mixing head are on the upstream side of the speed-reducing means.

3. An exhaust control device according to Claim 1 or 2, wherein the outlets (30) of the gas exhaust inlet pipe are on the downstream side of the speed-reducing means.

4. An exhaust control device according to Claim 1, 2 or 3, wherein the speed-reducing means (4) comprises a disc mounted at or towards the intake end of the chamber, the disc having a plurality of through-holes.

5. An exhaust control device according to Claim 1, 2, 3 or 4, wherein the speed-reducing means includes a muffler mounted inside the exhaust gas inlet pipe, and a filter is mounted inside the muffler for screening the impurities in the waste gas.

6. An exhaust control device according to any preceding claim, wherein the exhaust gas inlet (3) and outlet (11) pipes are parallel and spaced apart.

7. An exhausting pipe device for vehicles comprising:

a gas-mixing head being in a cylindrical shape, and being connected with an air-intake pipe at one end, while the other end thereof being connected with a mixed gas exhausting pipe; and being furnished with serveral waste gas inlets between said air-intake pipe and said mixed gas exhausting pipe, and said waste gas inlets being in a rectangular shape, and each of said inlets having a size-reducing hole toward said mixed gas exhausting pipe;

a gas-storage chamber being a shrt cylinder, and each of its two ends being furnished with two holes, of which the diameters are the same as those of the outer diameters of said mixed gas exhausting pipe and said waste-gas exhausting pipe;

a waste-gas exhausting pipe, of which the front end being connected with the exhausting valve of an engine, while the rear portion thereof being furnished with a plurality of exhausting holes behind a partition board;

a filtering net, which is substantially a tube-shape filter, being mounted inside a muffler for screening the impurities in the waste gas;

a muffler, which is a long cylinder with several rows of holes on its round wall, being also mounted inside said waste-gas exhausting pipe;

a seal cap being mounted at one end of said waste-gas exhausting pipe by means of a fastener for the purpose of sealing, cleaning and replacing conveniences; and

partition board, which is substantially a round disc with a plurality of holes, being mounted in one end of said gas-storage chamber for the purpose of reducing the flowing speed of the waste gas so as to increase the pressure of the gas.

8. An exhausting pipe device as claimed in Claim 7, wherein said air-intake pipe and said mixed gas exhausting pipe mounted on the both ends of said gas-mixing head are mounted in the holes on the both ends of said gas-storage chamber; and

the both ends of said waste-gas exhausting pipe are also mounted in the holes on the both ends of said gas-storage chamber respectively; and

the opposite end of said waste-gas exhausting pipe being closed with said seal cap, which is fastened on the outer wall of said gas-storage chamber.

FIG.1

0 281 700

F I G. 2

0 281 700

F I G. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | US-A-2 285 674 (MERETT)<br>* Whole document * | 1-4 | F 01 N 1/14 |
| A | | 7 | |
| | --- | | |
| X | US-A-1 465 904 (HERDLE)<br>* Page 1, line 42 - page 2, line 111; figures 1-6 * | 1 | |
| A | | 5 | |
| | --- | | |
| X | FR-A-1 533 948 (FERRY)<br>* Page 2, paragraphs 1,2; figures 1-4 * | 1,4 | |
| A | | 7 | TECHNICAL FIELDS SEARCHED (Int. Cl.4)<br><br>F 01 N |
| | ----- | | |

The present search report has been drawn up for all claims

| Place of search | Date of completion of the search | Examiner |
|---|---|---|
| THE HAGUE | 13-11-1987 | HAKHVERDI M. |

EPO Form 1503 03.82